# EUROPEAN PATENT APPLICATION

(11) **EP 2 589 857 A1**
(43) Date of publication of application: **08.05.2013**
(21) Application number: 11800924.0
(22) Date of filing: 29.06.2011
(51) Int. Cl.: F21V 8/00, F21V 7/08, F21V 7/09, F21V 9/08, F21Y 101/00

(54) **LIGHT SOURCE APPARATUS AND PSEUDO-SUNLIGHT IRRADIATING APPARATUS PROVIDED WITH SAME**

(30) Priority: 29.06.2010 JP 2010148059
(71) Applicant: Sharp Kabushiki Kaisha, Osaka-shi, Osaka 545-8522 (JP)
(72) Inventor: FUJIHARA, Norito, Osaka-shi, Osaka 545-8522 (JP); MINAMI, Kohji, Osaka-shi, Osaka 545-8522 (JP); NAKAMURA, Atsushi, Osaka-shi, Osaka 545-8522 (JP)
(74) Representative: Müller - Hoffmann & Partner
(86) International application number: PCT/JP2011/064971
(87) International publication number: WO 2012/002462

(57) **Abstract**

A light source apparatus (10), which is one embodiment of the present invention, includes: a light source (11); an elliptic reflector (14) which converges light from the light source (11); a front reflector (16) which is provided so as to face the elliptic reflector (14), has an arc-shaped cross section substantially centered on a location of the light source, and has an opening (21) through which the light goes out; and a round reflector (13) which is provided so as to face the front reflector (16) and reflects light traveling in a direction opposite to a direction in which the light goes out, wherein the light guide (30) which has a light entrance surface of the same size as the opening (21) is provided such that the light entrance surface is close to the opening (21). Further, the diameter of the light entrance surface of the light guide (30) is equal to a distance between line segments, one of which connects (i) an intersecting point of a minor axis (18) of the elliptic reflector (14) and a curved surface of the elliptic reflector (14) and (ii) a second focal point (20) of the elliptic reflector (14), and the other of which connects (a) another intersecting point of the minor axis (18) of the elliptic reflector (14) and another curved surface of the elliptic reflector (14) and (b) the second focal point (20) of the elliptic reflector (14).

## Description

### Technical Field

The present invention relates to (i) a pseudo-sunlight irradiation apparatus for emitting pseudo-sunlight and a light source apparatus which is to be provided in the pseudo-sunlight irradiation apparatus.

### Background Art

In recent years, there have been increasing demands for devices which can emit artificial light (pseudo-sunlight) that is similar to sunlight. Among such devices, in accordance with rapid development and spread of solar cell technologies, a device is particularly demanded which can emit pseudo-sunlight with high accuracy for carrying out checking, measuring, and experimenting on solar cells.

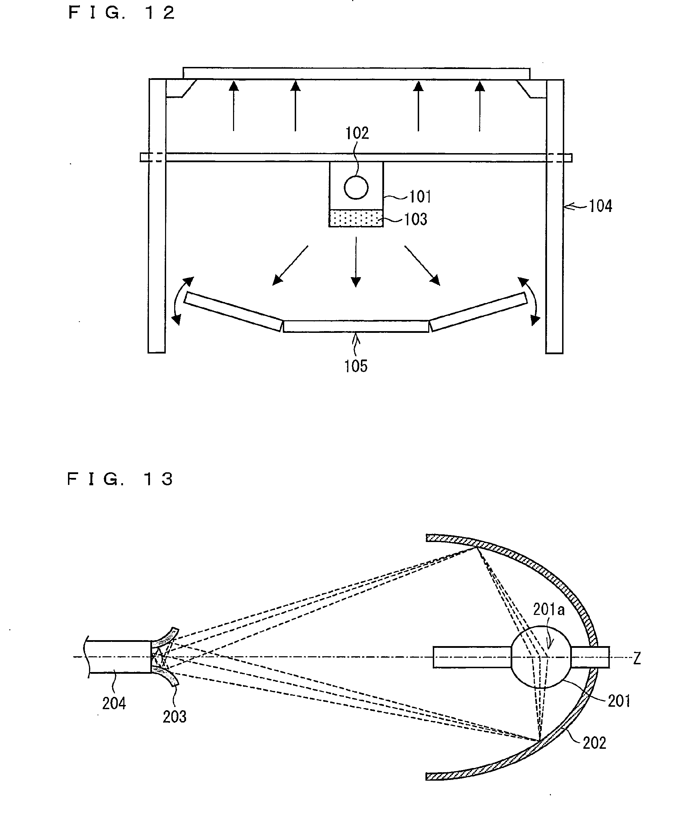

A key element demanded of pseudo-sunlight is having an emission spectrum approximate to that of natural sunlight. For example, Patent Literature 1 discloses a pseudo-sunlight irradiation apparatus employing a diffused light emission method. Fig. 12 illustrates a configuration of the pseudo-sunlight irradiation apparatus. The pseudo-sunlight irradiation apparatus illustrated in Fig. 12 includes (i) an optical filter 103 provided on a light exit surface having an area size smaller than an irradiation range of pseudo-sunlight, (ii) a lamp housing 101 in which a lamp such as a xenon lamp 102 is provided, and (iii) a reflecting plate 105 which is provided on a side of the lamp housing 101 which side faces the optical filter 103. The pseudo-sunlight irradiation apparatus emits pseudo-sunlight by causing xenon light to pass through the optical filter 103.

An elliptic reflecting mirror and a converging mirror are often used as means for highly efficiently converging light emitted by a lamp light source. For example, Patent Literature 2 discloses an illumination device which includes an elliptic reflecting mirror and a converging mirror. Fig. 13 illustrates a configuration of the illumination device. The illumination device illustrated in Fig. 13 converges light, which has been emitted by a light source 201a of a lamp 201 provided at a first focal point of the elliptic reflecting mirror 202, onto a second focal point. A light-converging area of the elliptic reflecting mirror 202 has a predetermined spread at the second focal point. Therefore, in a case where a converging mirror 203 is not provided, a part of light does not enter a rod lens 204. Under the circumstances, the converging mirror 203 further converges the light, which has been converged by the elliptic reflecting mirror 202, onto an area smaller than an entrance surface of the rod lens 204 so as to cause the light to fully enter the entrance surface of the rod lens 204.

### Citation List

### [Patent Literatures]

### [Patent Literature 1]

Japanese Patent Application Publication Tokukai No. 2003-28785 A (Publication date: January 29, 2003)

### [Patent Literature 2]

Japanese Patent Application Publication Tokukai No. 2007-234527 A (Publication date: September 13, 2007)

### Summary of Invention

### Technical Problem

However, according to the configuration illustrated in Fig. 12, directivity (radiation angle) of light which enters the optical filter 103 is not controlled. That is, no configuration is provided for controlling directivity of light, which has been emitted by the xenon lamp 102, while the light propagates toward the optical filter 103. According to the configuration, scattered light enters the optical filter 103. Therefore, according to the configuration illustrated in Fig. 12, (i) the optical filter 103 which has incidence angle dependency causes a significant light loss and (ii) a characteristic of the optical filter 103 cannot be sufficiently utilized. This causes a problem that a desired characteristic cannot be obtained.

According to the configuration illustrated in Fig. 13, directivity of light is once controlled by the elliptic reflecting mirror 202. However, while the light is being further converged by the converging mirror 203 onto the area smaller than the entrance surface of the rod lens 204, the directivity (radiation angle) is largely disturbed and therefore light having desired directivity cannot be obtained. That is, the configuration illustrated in Fig. 13 has a problem that light, whose directivity (radiation angle) is controlled, cannot be converged highly efficiently.

### Solution to Problem

The present invention is accomplished in view of the conventional problems, and its object is to provide (i) a small light source apparatus which can control a radiation angle and achieve high light converging efficiency and (ii) a pseudo-sunlight irradiation apparatus including the light source apparatus.

That is, in order to attain the above object, a first light source apparatus in accordance with the present invention includes:
a tubular light source which emits light;
an elliptic reflector (i) in which the tubular light source is provided in a first focal point of the elliptic reflector and (ii) which converges the light emitted from the tubular light source to a second focal point of the elliptic reflector;
a front reflector which (i) is provided so as to face the elliptic reflector, (ii) has an arc-shaped cross section centered on a location of the tubular light source and (iii) has an opening through which the light goes out;
a round reflector which (i) is provided so as to face the front reflector and (ii) reflects light that travels in a direction opposite to a direction in which the light goes out;
a side reflector which has a reflector surface perpendicular to a longitudinal axis of the tubular light source; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

In order to attain the above object, a second light source apparatus in accordance with the present invention includes:
a bulb light source which emits light;
an elliptic reflector (i) in which the bulb light source is provided in a first focal point of the elliptic reflector and (ii) which converges the light emitted from the bulb light source to a second focal point of the elliptic reflector;
a front reflector which (i) is provided so as to face the elliptic reflector, (ii) has an arc-shaped cross section centered on a location of the bulb light source and (iii) has an opening through which the light goes out;
a round reflector which (i) is provided so as to face the front reflector and (ii) reflects light that travels in a direction opposite to a direction in which the light goes out; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

According to the configuration, each of the first and second light source apparatuses in accordance with the present invention includes the front reflector which (i) is provided so as to face the elliptic reflector, (ii) has an arc-shaped cross section centered on a location of the tubular light source and (iii) has an opening through which the light goes out. This makes it possible to guide light, which has been reflected by the elliptic reflector, toward the opening of the front reflector without largely disturbing the directivity. Note that the "arc-shaped cross section centered on a location of the light source" does not necessarily need to be an exact center in the location of the light source, provided that an effect similar to that brought about in a case where the location of the light source is assumed to be the center. That is, the arc-shaped cross section may be substantially centered on the location of the light source.

Further, according to the configuration, each of the first and second light source apparatuses in accordance with the present invention includes the light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area. Therefore, even in a case where a spectral modulation member is provided on the light exit surface, the light guide can cause light, whose directivity is controlled, to enter the spectral modulation member. This makes it possible to provide a light source apparatus that is capable of sufficiently utilizing the characteristics of the spectral modulation member.

According to the configuration, the entrance surface of the light guide is located at the opening of the front reflector. This makes it possible to directly extract, to the light guide, light whose angle has been controlled by the elliptic reflector.

According to the configuration, the opening of the front reflector has the same size as the entrance surface of the light guide. This allows light, whose directivity has been controlled, to enter the light guide with highest efficiency. According to the foregoing Fig. 13, directivity of light is once controlled by the elliptic reflecting mirror. However, the light is reflected at the converging mirror and thereby converted into random light. As a result, light beams incident on the rod lens have incident angles (angle between incident light and optical axis) of 0 degrees to 90 degrees, technically, incident angles sufficiently near 90 degrees. In this regard, as described above, the light source apparatus of the present invention configured like above makes it possible to directly extract, to the light guide, light whose angle has been controlled by the elliptic reflector, and possible to allow light, whose directivity has been controlled, to enter the light guide with highest efficiency.

In particular, the light entrance surface of the light guide is positioned (i) on the side of the second focal point, which side is closer to the first focal point of the elliptic reflector and (ii) on the side of the intersecting point of the minor axis of the elliptic reflector and the curved surface of the elliptic reflector, which side is closer to the second focal point. This makes it possible to improve emission efficiency without largely deteriorating emission directivity.

According to the configuration, the round reflector is provided. If the elliptic reflector located on a side of the light source is extended to a lower side of the light source (i.e., a side of the light source which side does not face the light guide), the curved surface interferes with the light source, and accordingly light cannot be converged onto an intended location (i.e., the second focal point) because a focal location is deviated due to the curved surface having different curvatures. On the other hand, in a case where the round reflector, which is concentric with the light source, is provided on the side of the light source which side does not face the light guide, light emitted by the light source (i) is reflected in the opposite direction and (ii) is reflected by the elliptic reflector located on the side opposite to the light guide. This makes it possible to converge light onto the vicinity of the second focal point.

According to the configuration, in a case where the tubular light source is provided, the side reflector is provided which has a reflector surface lying perpendicular to the longitudinal axis of the tubular light source. The side reflector thus provided controls, together with the elliptic reflector, directivity of light, which is radially emitted by the tubular light source, so as to guide the light toward the opening of the front reflector.

As is clear from above, according to the present invention configured like above, it is possible to provide a light source apparatus that can be reduced in size, which light source apparatus is capable of controlling radiation angle and achieves high light converging efficiency.

The present invention also encompasses a pseudo-sunlight irradiation apparatus including a light source apparatus configured like above.

Additional objects, features, and strengths of the present invention will be made clear by the description below. Further, the advantages of the present invention will be evident from the following explanation in reference to the drawings.

### Advantageous Effects of Invention

As has been described, a first light source apparatus in accordance with the present invention includes:
a tubular light source which emits light;
an elliptic reflector (i) in which the tubular light source is provided in a first focal point of the elliptic reflector and (ii) which converges the light emitted from the tubular light source to a second focal point of the elliptic reflector;
a front reflector which (i) is provided so as to face the elliptic reflector, (ii) has an arc-shaped cross section centered on a location of the tubular light source and (iii) has an opening through which the light goes out;
a round reflector which (i) is provided so as to face the front reflector and (ii) reflects light that travels in a direction opposite to a direction in which the light goes out;
a side reflector which has a reflector surface perpendicular to a longitudinal axis of the tubular light source; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

As has been described, a second light source apparatus in accordance with the present invention includes:
a bulb light source which emits light;
an elliptic reflector (i) in which the bulb light source is provided in a first focal point of the elliptic reflector and (ii) which converges the light emitted from the bulb light source to a second focal point of the elliptic reflector;
a front reflector which (i) is provided so as to face the elliptic reflector, (ii) has an arc-shaped cross section centered on a location of the bulb light source and (iii) has an opening through which the light goes out;
a round reflector which (i) is provided so as to face the front reflector and (ii) reflects light that travels in a direction opposite to a direction in which the light goes out; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

According to the configuration, it is possible to provide a light source apparatus that can be reduced in size, which light source apparatus is capable of controlling radiation angle and achieves high light converging efficiency.

### Brief Description of Drawings

Fig. 1

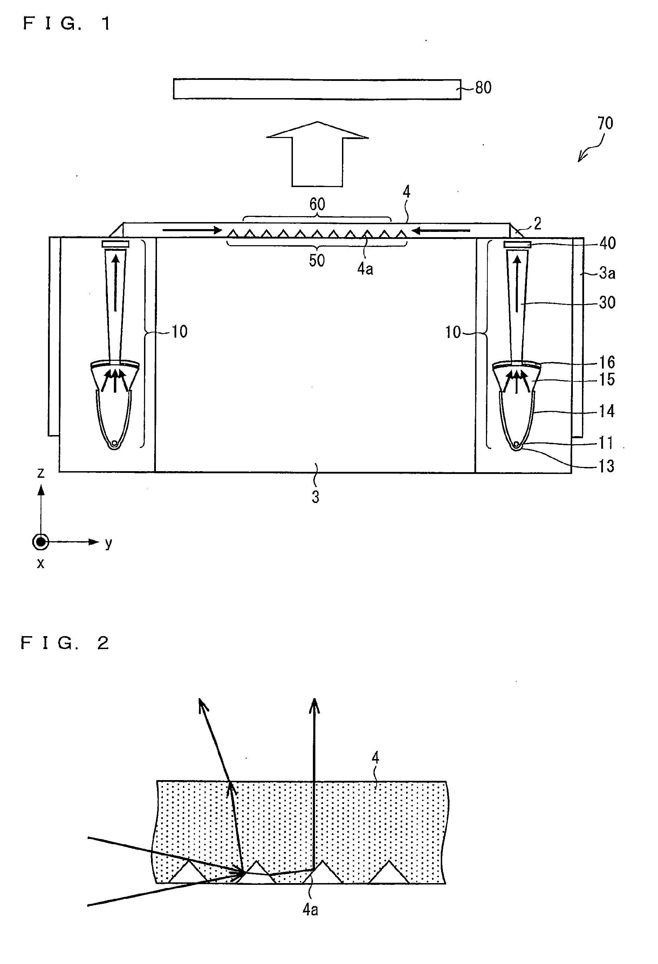

   Fig. 1 is a view illustrating a configuration of a pseudo-sunlight irradiation apparatus in accordance with an embodiment of the present invention.
Fig. 2
   Fig. 2 is a magnified view illustrating a part of the pseudo-sunlight irradiation apparatus illustrated in Fig. 1.
Fig. 3

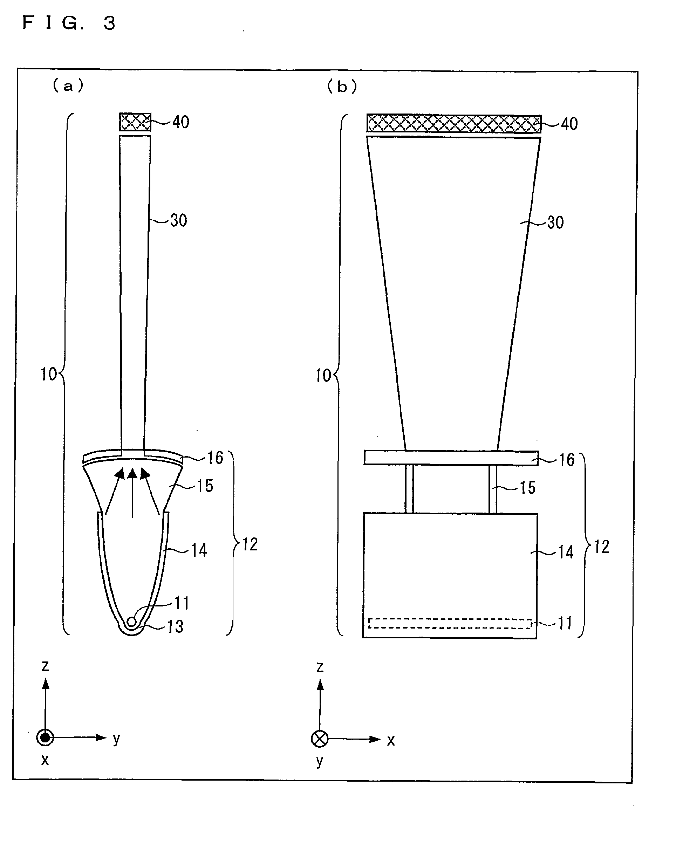

   Fig. 3 is a view illustrating a configuration of a light source apparatus provided in the pseudo-sunlight irradiation apparatus illustrated in Fig. 1.
Fig. 4

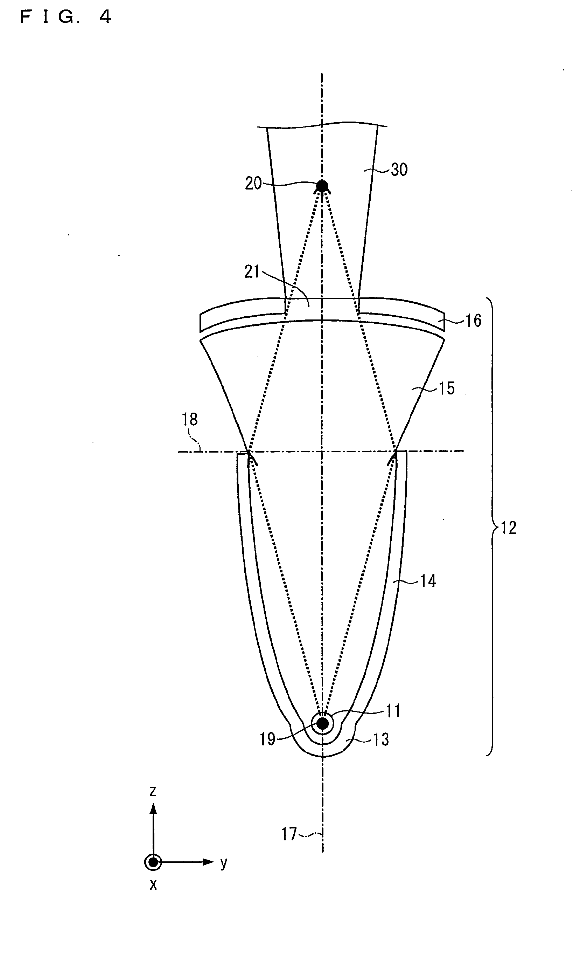

   Fig. 4 is a view partially illustrating a configuration of a light source apparatus provided in the pseudo-sunlight irradiation apparatus illustrated in Fig. 1.
Fig. 5

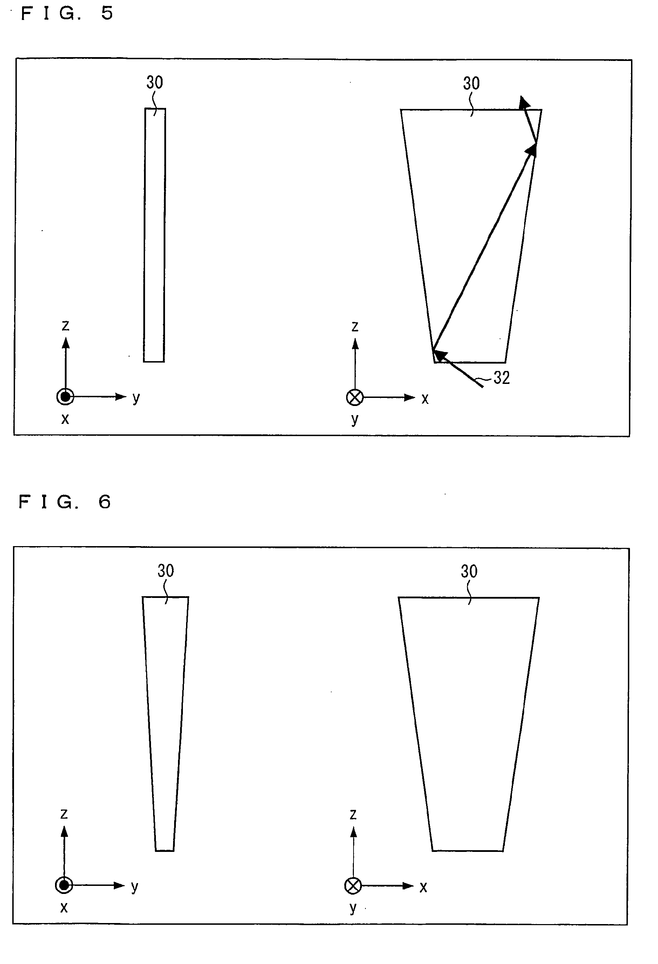

   Fig. 5 is a view partially illustrating a configuration of a light source apparatus provided in the pseudo-sunlight irradiation apparatus illustrated in Fig. 1.
Fig. 6
   Fig. 6 is a view partially illustrating a configuration of a light source apparatus provided in the pseudo-sunlight irradiation apparatus illustrated in Fig. 1.
Fig. 7

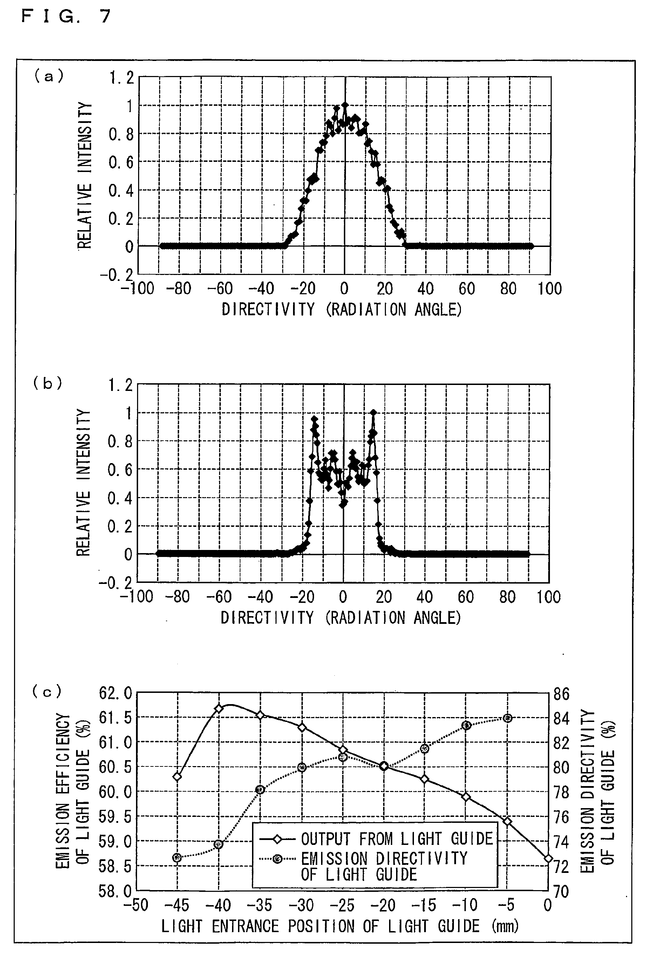

   Fig. 7 is a graph illustrating results of verifying directivity of a light source apparatus provided in the pseudo-sunlight irradiation apparatus illustrated in Fig. 1. (a) of Fig. 7 is a graph illustrating directivity distribution in an x direction on an exit surface of a light guide. (b) of Fig. 7 is a graph illustrating directivity distribution in a y direction on the exit surface of the light guide. (c) of Fig. 7 is a graph illustrating a relation between a location of an entrance surface of the light guide, emission efficiency of the light guide, and emission directivity of the light guide.
Fig. 8

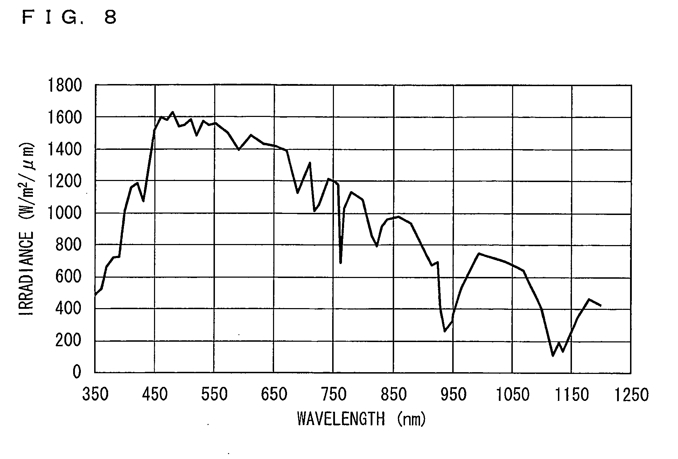

   Fig. 8 is a graph illustrating the reference spectrum of sunlight.
Fig. 9

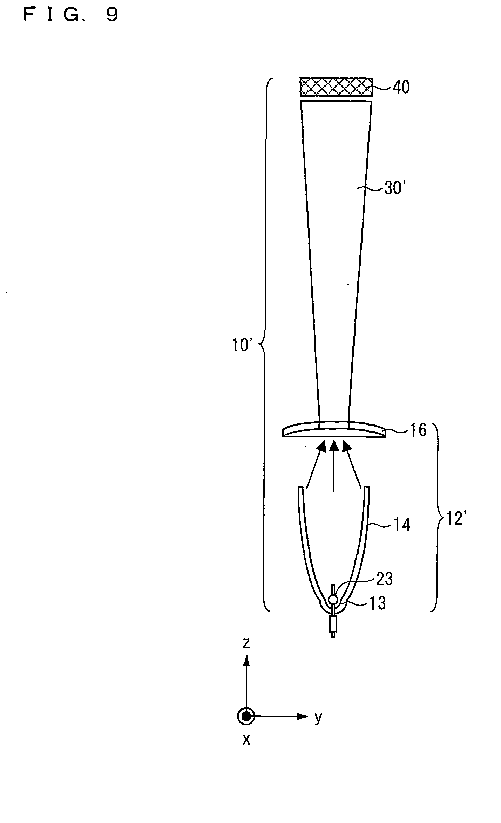

   Fig. 9 is a view illustrating another configuration of a light source apparatus provided in a pseudo-sunlight irradiation apparatus in accordance with an embodiment of the present invention.
Fig. 10

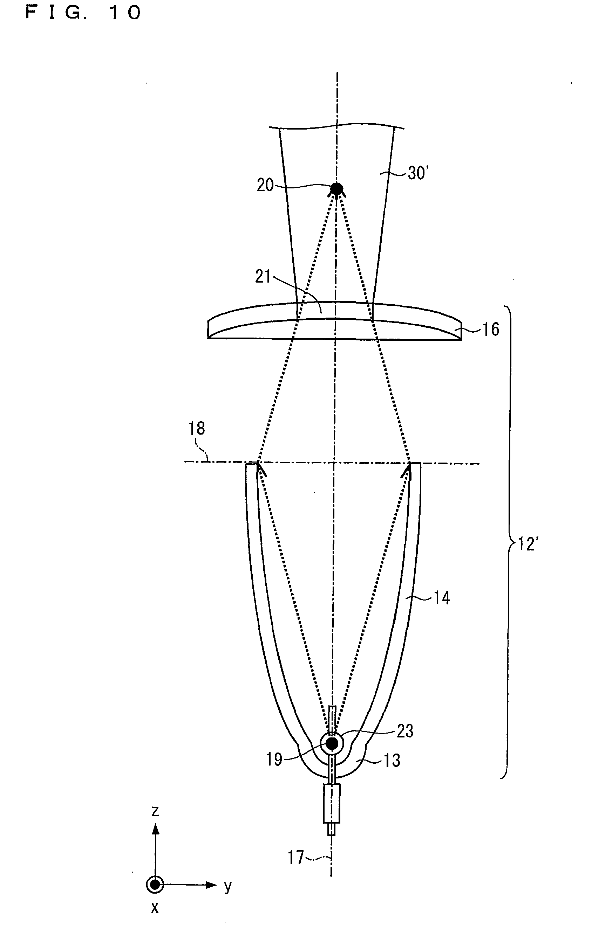

   Fig. 10 is a view partially illustrating a configuration of the light source apparatus illustrated in Fig. 9.
Fig. 11

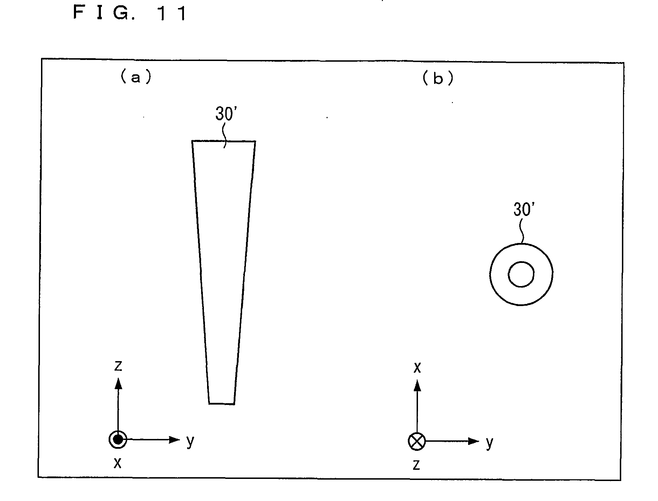

   Fig. 11 is a view partially illustrating a configuration of the light source apparatus illustrated in Fig. 9.
Fig. 12
   Fig. 12 is a view illustrating a configuration of a conventional pseudo-sunlight irradiation apparatus.
Fig. 13
   Fig. 13 is a view illustrating a configuration of a conventional light source device aimed at improving efficiency.

### Description of Embodiments

### [Embodiment 1]

The following description will discuss an embodiment of the present invention with reference to Figs. 1 through 8.

In the present embodiment, details are described as to a pseudo-sunlight irradiation apparatus 70 for irradiating an irradiation surface 80 with pseudo-sunlight (see Fig. 1). The pseudo-sunlight is a kind of artificial light and has an emission spectrum which is extremely approximate to an emission spectrum of natural light (sunlight). On the irradiation surface, for example, a solar cell is provided.

In particular, the present invention is characterized by a light source apparatus provided in a pseudo-sunlight irradiation apparatus. In the following description, the pseudo-sunlight irradiation apparatus will be first described as an overall configuration, and then details of the light source apparatus will be described.

### (Configuration of Pseudo-sunlight irradiation apparatus)

Fig. 1 is a view illustrating a main configuration of the pseudo-sunlight irradiation apparatus 70, in accordance with an embodiment of the present invention. The pseudo-sunlight irradiation apparatus 70 includes light source apparatuses 10, a housing 3, reflecting bodies 2, and a light guide plate 4 (see Fig. 1).

The light source apparatuses 10 are provided on respective right and left sides of the housing 3. According to the present embodiment, two light source apparatuses 10 are provided on the right and left, respectively. Note, however, that the number of light source apparatuses 10 is not limited to this, and it is possible to employ a configuration in which a single light source apparatus 10 is provided only on the right or left.

Each of the light source apparatuses 10 has a light source 11 so that light, which is emitted by the light source 11, propagates inside the light source apparatus 10 and then enters a corresponding one of the reflecting bodies 2 as indicated by an arrow of Fig. 1. Details of this configuration will be described later.

The housing 3 is configured to support the light source apparatuses 10 and has cooling devices 3a which are provided in the vicinity of the respective light source apparatuses 10. The cooling devices 3a suppress unevenness of measurement results caused by a temperature rise of the entire pseudo-sunlight irradiation apparatus 70, which temperature rise is caused due to the light source 11.

Each of the reflecting bodies 2 (i) is provided in an upper part of the housing 3 so that light emitted by a corresponding one of the light source apparatuses 10 enters the reflecting body 2 and (ii) is configured to change a light path of the light emitted by the corresponding one of the light source apparatuses 10 in a desired direction. A reflection mirror can be employed as each of the reflecting bodies 2. Light reflected by each of the reflecting bodies 2 is configured to enter the light guide plate 4.

The light guide plate 4 is provided on an upper surface of the housing 3 and is arranged so that a light exit surface (surface area 60), from which light is emitted, faces upward. Light reflected by the reflecting bodies 2 is configured to (i) enter the light guide plate 4, (ii) be guided inside the light guide plate 4, and (iii) be emitted via the surface area 60 toward the irradiation surface 80.

When the irradiation surface 80 is irradiated with pseudo-sunlight emitted from the surface area 60 of the light guide plate 4, a light reflection mechanism provided in the light guide plate 4 is used.

Fig. 2 is a magnified view partially illustrating a configuration of an area 50 of the light guide plate 4 illustrated in Fig. 1. A plurality of scattering grooves 4a each having a light reflecting property are provided in the light guide plate 4 (see Fig. 2). As illustrated in Fig. 2, light, which has entered the light guide plate 4, is reflected by the plurality of scattering grooves 4a so as to be guided toward the irradiation surface 80. It is possible to improve uniformity in illuminance to some extent by modifying a pitch and a shape of the plurality of scattering grooves 4a. Such a pitch and a shape need to be optimized in accordance with radiation directivity of light that enters the light guide plate 4. Therefore, in a case where, for example, a xenon lamp is employed as the light source 11, the pitch and the shape of the light guide plate 4 may be designed in accordance with radiation directivity of xenon light.

Note that the light reflection mechanism provided in the light guide plate 4 is not limited to the configuration illustrated in Fig. 2. For example, a configuration may be employed in which concavities and convexities are provided on a surface of the light guide plate 4. In this case, such concavities and convexities may be configured by, for example, a plurality of lumps formed on the surface of the light guide plate 4 by ink containing beads. The plurality of lumps serve as scatterers for scattering light.

### (Configuration of light source apparatus)

The following description will discuss the light source apparatus 10 in detail, with reference to (a) and (b) of Fig. 3 and Fig. 4. (a) and (b) of Fig. 3 illustrate a configuration of the light source apparatus 10. (a) of Fig. 3 illustrates the light source apparatus 10 viewed in a direction identical with that of Fig. 1. (b) of Fig. 3 illustrates a lateral view of the configuration of the light source apparatus 10 illustrated in (a) of Fig. 3. Fig. 4 is a view illustrating a detailed configuration of the light source apparatus 10 viewed in the direction identical with that of Fig. 1.

The light source apparatus 10 includes the light source 11, a reflecting member 12, a light guide 30, and an optical filter 40 (spectral modulation member) (see (a) and (b) of Fig. 3). The light source apparatus 10 is configured so that light emitted by the light source 11 enters the light guide 30 via the reflecting member 12 and then the light, which has been guided in the light guide 30, is emitted so as to enter the optical filter 40.

### (Light source 11)

The light source 11 may be configured by a light source which is provided in a conventionally known pseudo-sunlight irradiation apparatus. Examples of the light source 11 encompass a xenon lamp and a halogen lamp. The light source 11 can have, for example, a tubular shape. The light source 11 is provided in the vicinity of a first focal point 19 of an elliptic reflector 14. The present embodiment describes a configuration in which a tubular light source 11 is provided. The tubular light source 11 is configured to radially emit light from its periphery.

### (Reflecting Member 12)

The reflecting member 12 has a function to reflect light, which has been emitted by the light source 11 in a direction other than toward the light guide 30, so that the light is directed to the light guide 30.

The reflecting member 12 is made up of a round reflector 13 (i.e., U-shaped reflection mirror, dent), an elliptic reflector 14 (i.e., U-shaped reflection mirror), a side reflector 15 (i.e., lateral mirror), and a front reflector 16 (i.e., returning mirror) (see Fig. 4). The following description will discuss each of the parts of the reflecting member 12.

The round reflector 13 is a reflection mirror having a groove-like shape which is formed so as to (i) extend in a longitudinal direction of the tubular light source 11 and (ii) cover a side (hereinafter, referred to as "opposite side") of the tubular light source 11 which side does not face the light guide 30. Light emitted from the opposite side cannot enter the light guide 30 by itself. In view of this, the round reflector 13 is provided so as to reflect such light toward the light guide 30. This allows the light, which has been emitted from the opposite side, to enter the light guide 30.

The elliptic reflector 14 has a substantially tapered shape which is formed so as to extend toward the light guide 30 from edges of the round reflector 13 having the groove-like shape. Here, the elliptic reflector 14 and the round reflector 13 can be formed integrally. Such an integral structure can be considered to have a substantial U-shape when viewed in a cross section (as shown in Fig. 4) taken in a direction perpendicular to the longitudinal direction of the tubular light source 11. The elliptic reflector 14 can reflect, toward the light guide 30, (i) light emitted by the light source in directions other than toward the light guide 30 and (ii) light reflected by the round reflector 13 in directions other than toward the light guide 30. The elliptic reflector 14 can be configured by a reflection mirror.

Two side reflectors 15 are provided on ends of the tubular light source 11 (see (b) of Fig. 3). The two side reflectors 15 are apart from each other by a distance (width) wider than an entrance surface of the light guide 30. Each of the side reflectors 15 is configured by a mirror whose reflecting surface lies in a direction perpendicular to the longitudinal direction of the tubular light source 11. The two side reflectors 15 thus configured can reflect, toward the light guide 30, (i) light emitted by the light source in directions other than toward the light guide 30 and (ii) light reflected by the round reflector 13 in directions other than toward the light guide 30, as with the elliptic reflector 14.

The front reflector 16 is provided in the vicinity of the entrance surface of the light guide 30. For example, the front reflector 16 is provided so as to abut on the entrance surface of the light guide 30 (see (a) of Fig. 3). The front reflector 16 has a reflection mirror which (i) is provided so as to face the elliptic reflector 14 and the round reflector 13 and (ii) has an arc-shaped cross section substantially centered on a location of the light source. Further, the front reflector 16 has an opening 21 whose shape is identical with that of the entrance surface of the light guide 30 (see Fig. 4).

The opening 21 of the front reflector 16 is configured to have a diameter which is equal to a distance between line segments that connect (i) intersecting points of a minor axis 18 of the elliptic reflector 14 and curved surfaces of the elliptic reflector 14 with (ii) a second focal point 20 of the elliptic reflector 14.

The front reflector 16 reflects light, which is directed not to the light entrance surface of the light guide 30 but to the vicinity of the entrance surface because of a slight deviation of the radiation angle, so that the light is directed toward the other reflecting members (e.g., the elliptic reflector 14 and the round reflector 13). This causes the light, which has reached the vicinity of the light entrance surface of the light guide 30, to be once returned toward the side on which the light source is provided.

As such, the front reflector 16 allows light emitted by the light source 11 to enter the entrance surface of the light guide 30 further efficiently.

The opening 21 of the front reflector 16 is adjacent to the light entrance surface of the light guide 30. That is, light, which has been guided to the opening 21 of the front reflector 16 while being reflected by the reflecting member 12, directly enters the light entrance surface of the light guide 30. This makes it possible to increase the amount of incident light, as compared with a configuration in which a space is provided between the opening 21 and the light entrance surface of the light guide 30.

As above described, it is possible to cause light, which does not directly enter the entrance surface of the light guide 30, to finally enter the entrance surface by the various reflection materials constituting the reflecting member 12, in addition to light that directly enters the entrance surface from the light source 11. This makes it possible to improve use efficiency of light emitted by the light source 11.

### (Light guide 30)

The light guide 30 has a structure in which a width (i.e., a length in an x axis direction of Fig. 3) thereof gradually increases from one end (i.e., the light entrance surface) to the other end (i.e., a light exit surface) (see (b) of Fig. 3). The width direction is in parallel with the longitudinal direction of the tubular light source 11.

Light, which has entered the light entrance surface of the light guide 30, is guided inside the light guide 30 and is then emitted from the light exit surface. While the light, which has entered the light entrance surface, passes through inside the light guide 30 having the structure illustrated in (b) of Fig. 3, the light is changed so as to propagate in one direction. Fig. 5 illustrates an example case in which light passes through inside the light guide 30 illustrated in (b) of Fig. 3. A lateral surface (tapered surface) of the light guide 30 is configured to reflect light (see Fig. 5). With the configuration, light is directed in one direction while being (repeatedly) reflected. Fig. 5 schematically illustrates a light path 32 of light which is directed to the light exit surface by being reflected.

The light guide 30 has four lateral surfaces, and two of the four lateral surfaces face each other and the other two of the four lateral surfaces face each other. Specifically, the light guide 30 has (i) a pair of facing surfaces illustrated in (a) of Fig. 3 (more properly, (a) of Fig. 3 illustrates one of the facing surfaces) and (ii) another pair of facing surfaces illustrated in (b) of Fig. 3 (more properly, (b) of Fig. 3 illustrates one of the facing surfaces). Fig. 5 is a magnified view of the surfaces of the light guide 30 which are illustrated in (a) and (b) of Fig. 3, respectively. As is clear from Fig. 5, one of the pairs of facing surfaces of the light guide 30 has a rectangular shape. Note, however, that the present invention is not limited to this. Alternatively, both the pairs of facing surfaces may have a tapered shape whose width increases toward the light emission side (see Fig. 6). The configuration illustrated in Fig. 6 can control a radiation angle (directivity) of light more effectively.

Here, the radiation angle of light is an angle formed by an optical axis (z axis) and light emitted from the exit surface of the light guide 30.

The light guide 30 thus controls directivity (radiation angle) of light which is to enter the optical filter 40. Specifically, the light guide 30 guides light, which has entered its entrance surface, to a light guide area whose lateral surfaces are light reflecting surfaces. The radiation angle is controlled by causing the light in the light guide area to be repeatedly reflected by the lateral surfaces. Since the light guide 30 has the tapered shape whose width gradually increases from the entrance surface to the exit surface, it is possible to change random radiation directivity of light, which passes through inside the light guide (i.e., in the light guide area), into uniform radiation directivity. This allows light, which has predetermined directivity, to be emitted from the exit surface of the light guide 30.

The configuration, in which the light guide 30 is provided between the light source 11 and the optical filter 40, makes it possible to cause light that has predetermined directivity to enter the optical filter 40. The optical filter 40 has incidence angle dependency. Therefore, according to the conventional configuration, there have been the various problems caused because light having predetermined directivity does not enter the optical filter. On the other hand, according to the configuration of the present embodiment, it is possible to obtain incident light which conforms to the incidence angle dependency of the optical filter 40. This makes it possible to significantly suppress a loss of light. Further, a characteristic of the optical filter 40 can be sufficiently utilized.

### (Optical filter 40)

The optical filter 40 is provided in the vicinity of the exit surface of the light guide 30 so that light passed through inside the light guide 30 enters the optical filter 40. It is preferable that the optical filter 40 has a size which is (i) identical with that of the exit surface of the light guide 30 or (ii) slightly larger than the exit surface.

The optical filter 40 is configured to attenuate a spectrum in a particular wavelength band. In other words, the optical filter 40 is configured to pass only a spectrum in a certain wavelength band. It is possible to employ any optical filter, provided that the optical filter has such a function.

### (Verification of directivity and emission efficiency of light source apparatus)

(a) and (b) of Fig. 7 show verification results of directivity of the light source apparatus 10, in accordance with the present embodiment. (c) of Fig. 7 shows verification results of a relation between a location of an entrance surface of a light guide, emission efficiency of the light guide, and emission directivity of the light guide. The emission directivity of the light guide is a ratio of light which is within ± 20 degrees.

(a) of Fig. 7 is a graph showing directivity distribution in an x direction on the exit surface of the light guide 30. (b) of Fig. 7 is a graph showing directivity distribution in a y direction on the exit surface of the light guide 30. Note that the x direction and the y direction are identical with those shown in (a) and (b) of Fig. 3.

As shown in (a) and (b) of Fig. 7, it is possible to easily cause light, whose directivity is controlled, to be emitted in an optical axis direction by using the light source apparatus 10 and the light guide 30 which have a controlled radiation angle (directivity).

As shown in (c) of Fig. 7, light emission efficiency is increased by shifting the location of the light entrance surface of the light guide 30 toward the first focal point 19 of the elliptic reflector 14. In a case where a location of a light entrance surface of a light guide is set so that a diameter of an opening of a front reflector is substantially equal to a distance between line segments that connect (i) intersecting points of a minor axis of an elliptic reflector and curved surfaces of the elliptic reflector with (ii) a second focal point of the elliptic reflector, it is possible to satisfy desired emission directivity and to obtain maximum emission efficiency. From this, it is possible to easily obtain an optimal location of the entrance surface of the light guide, without calculating or measuring the emission efficiency and the emission directivity shown in (c) of Fig. 7. For example, optimal values are approximately - 20 mm to -25 mm.

### (Effect of Embodiment 1)

As above described, the light source apparatus 10 in accordance with the present embodiment includes the front reflector 16 which (i) is provided so as to face the elliptic reflector, (ii) has an arc-shaped cross section centered on a location of the light source, and (iii) has an opening through which light is emitted. With the configuration, it is possible to guide light, which has been reflected by the elliptic reflector 14, toward the opening 21 of the front reflector 16 without largely disturbing the directivity. Note that the "arc-shaped cross section centered on a location of the light source" does not necessarily need to be an exact center in the location of the light source, provided that an effect similar to that brought about in a case where the location of the light source 11 is assumed to be the center. That is, the arc-shaped cross section may be substantially centered on the location of the light source 11.

Moreover, the light guide 30 has the light entrance surface which (i) has a size identical with that of the opening 21 of the front reflector 16 and (ii) is provided on the opening 21 so that directivity of light is controlled in the light guide area located between the light entrance surface and the light exit surface. Therefore, even in a case where the optical filter 40 is provided on the light exit surface of the light guide 30, the light guide 30 can cause light, whose directivity is controlled, to enter the optical filter 40. This makes it possible to provide a light source apparatus that can sufficiently utilize the characteristic of the optical filter 40.

The light entrance surface of the light guide 30 is located at the opening 21 of the front reflector 16. This allows the light guide 30 to directly extract light whose angle has been controlled by the elliptic reflector 14.

According to the configuration, the opening 21 of the front reflector 16 has the same size as the entrance surface of the light guide 30. This allows light, whose directivity has been controlled, to enter the light guide 30 with highest efficiency.

In particular, the light entrance surface of the light guide 30 is positioned (i) on a side of the second focal point 20 of the elliptic reflector 14, which side is closer to the first focal point of the elliptic reflector 14 and (ii) on a side of the intersecting points of the minor axis 18 of the elliptic reflector 14 and curved surfaces of the elliptic reflector 14, which side is closer to the second focal point. This makes it possible to improve emission efficiency without largely deteriorating emission directivity, as shown in (c) of Fig. 7.

According to the light source apparatus 10 of the present embodiment, the round reflector 13 is provided. If the elliptic reflector 14 located on sides of the light source 11 is extended to a lower side of the light source (i.e., a side of the light source which side does not face the light guide), the curved surfaces interfere with the light source, and accordingly light cannot be converged onto an intended location (i.e., the second focal point) because a focal location is deviated due to the curved surfaces having different curvatures. On the other hand, in a case where the round reflector 13, which is concentric with the light source 11, is provided on the side of the light source 11 which side does not face the light guide 30, light emitted by the light source 11 (i) is reflected in the opposite direction and (ii) is reflected by the elliptic reflector 14 located on the side opposite to the light guide 30. This makes it possible to converge light onto the vicinity of the second focal point.

According to the configuration, the side reflector 15 is provided which has a reflector surface lying perpendicular to the longitudinal direction of the tubular light source 11. The side reflector 15 thus provided controls, together with the elliptic reflector 14, directivity of light, which is radially emitted by the tubular light source, so as to guide the light toward the opening 21 of the front reflector 16.

According to the configuration, light is sufficiently adjusted (modulated) by the optical filter 40, as compared with the conventional configuration. Therefore, by employing the light source apparatus 10 of the present embodiment as the light source apparatus of the pseudo-sunlight irradiation apparatus 70 illustrated in Fig. 1, it is possible to provide an apparatus that emits light which is further similar to sunlight. Fig. 8 illustrates the spectrum of sunlight (JIS C 8941).

According to the configuration of the light source apparatus 10 in accordance with the present embodiment, it is possible to cause light, which has predetermined directivity, to enter the optical filter 40. It is therefore possible to reduce a size of an apparatus, as compared with the conventional configuration. In a case where the light source apparatus 10, which has a reduced size, is provided in the pseudo-sunlight irradiation apparatus 70, it is possible to reduce a size of the pseudo-sunlight irradiation apparatus, accordingly.

The reflecting surfaces are efficiently arranged with respect to light, which is emitted by the nondirectional light source, so that only light having a desired radiation characteristic enters the light guide. This allows the reduction in size of the apparatus. That is, it is possible to obtain the desired radiation characteristic without utilizing multiple reflection and/or a large reflecting surface. This makes it possible to reduce a size of the light source apparatus itself.

### [Embodiment 2]

The following description will discusses another embodiment of the present invention with reference to Figs. 9 through 12. The present embodiment discusses differences between the present embodiment and Embodiment 1. Therefore, for convenience of description, members having functions identical to those described in Embodiment 1 are assigned identical referential numerals, and their descriptions are omitted here.

Figs. 9 and 10 are views each of which illustrates a configuration of a light source apparatus 10' of the present embodiment. The light source apparatus 10' of the present embodiment includes the light source apparatus 10' shown in Fig. 9, instead of the light source apparatus 10 of Embodiment 1 shown in (a) and (b) of Fig. 3.

As illustrated in Fig. 10, the light source apparatus 10' of the present embodiment includes a bulb light source 23, a reflecting member 12' and a light guide 30'.

The bulb light source 23 is constituted by a light emitting body (e.g., filament) and a glass bulb surrounding the light emitting body. The bulb light source 23 is a light source that emits light spherically. The bulb light source 23 is for example a so-called miniature bulb.

The reflecting member 12' is constituted by a round reflector 13, an elliptic reflector 14 and a front reflector 16. The reflecting member 12' is circularly symmetric with respect to an optical axis (z axis) of the bulb light source 23.

The functions and position of the front reflector 16 and the size of the opening 21 are the same as those of Embodiment 1 shown in Fig. 4, and their descriptions are omitted here.

As illustrated in (a) and (b) of Fig. 11, the light guide 30' is circularly symmetric with respect to the optical axis (z axis) of the bulb light source 23. Even if the light guide 30' has a shape of a cylinder that is not tapered, it is still possible to easily control directivity by virtue of the shape of the elliptic reflector 14. Note, however, that the light guide 30' having a tapered cylindrical structure as shown in Fig. 11 makes it possible to better control the radiation angle (directivity) of light.

The light entrance surface of the light guide 30' is the same as that of Embodiment 1, and its description is omitted here.

The present invention is not limited to the foregoing embodiments. Those skilled in the art can variously alter the present invention within the scope of the claims. Specifically, a new embodiment is obtained from a combination of technical means properly altered within the scope of the claims. That is, the embodiments discussed in the foregoing description of embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### (Overview of the present invention)

In order to attain the foregoing object, a first light source apparatus in accordance with the present invention includes:
a tubular light source which emits light;
an elliptic reflector (i) in which the tubular light source is provided in a first focal point of the elliptic reflector and (ii) which converges the light emitted from the tubular light source to a second focal point of the elliptic reflector;
a front reflector which (i) is provided so as to face the elliptic reflector, (ii) has an arc-shaped cross section centered on a location of the tubular light source and (iii) has an opening through which the light goes out;
a round reflector which (i) is provided so as to face the front reflector and (ii) reflects light that travels in a direction opposite to a direction in which the light goes out;
a side reflector which has a reflector surface perpendicular to a longitudinal axis of the tubular light source; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

In order to attain the foregoing object, a second light source apparatus in accordance with the present invention includes:
a bulb light source which emits light;
an elliptic reflector (i) in which the bulb light source is provided in a first focal point of the elliptic reflector and (ii) which converges the light emitted from the bulb light source to a second focal point of the elliptic reflector;
a front reflector which (i) is provided so as to face the elliptic reflector, (ii) has an arc-shaped cross section centered on a location of the bulb light source and (iii) has an opening through which the light goes out;
a round reflector which (i) is provided so as to face the front reflector and (ii) reflects light that travels in a direction opposite to a direction in which the light goes out; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

According to the configuration, each of the first and second light source apparatuses in accordance with the present invention includes the front reflector which (i) is provided so as to face the elliptic reflector, (ii) has an arc-shaped cross section centered on a location of the tubular light source and (iii) has an opening through which the light goes out. This makes it possible to guide light, which has been reflected by the elliptic reflector, toward the opening of the front reflector without largely disturbing the directivity. Note that the "arc-shaped cross section centered on a location of the light source" does not necessarily need to be an exact center in the location of the light source, provided that an effect similar to that brought about in a case where the location of the light source is assumed to be the center. That is, the arc-shaped cross section may be substantially centered on the location of the light source.

Further, according to the configuration, each of the first and second light source apparatuses in accordance with the present invention includes the light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area. Therefore, even in a case where a spectral modulation member is provided on the light exit surface, the light guide can cause light, whose directivity is controlled, to enter the spectral modulation member. This makes it possible to provide a light source apparatus that can sufficiently utilize the characteristics of the spectral modulation member.

According to the configuration, the entrance surface of the light guide is located at the opening of the front reflector. This makes it possible to directly extract, to the light guide, light whose angle has been controlled by the elliptic reflector.

According to the configuration, the opening of the front reflector has the same size as the entrance surface of the light guide. This allows light, whose directivity has been controlled, to enter the light guide with highest efficiency. According to the foregoing Fig. 13, directivity of light is once controlled by the elliptic reflecting mirror. However, the light is reflected at the converging mirror and thereby converted into random light. As a result, light beams incident on the rod lens have incident angles (angle between incident light and optical axis) of 0 degrees to 90 degrees, technically, incident angles sufficiently near 90 degrees. In this regard, as described above, the light source apparatus of the present invention configured like above makes it possible to directly extract, to the light guide, light whose angle has been controlled by the elliptic reflector, and possible to allow light, whose directivity has been controlled, to enter the light guide with highest efficiency.

In particular, the light entrance surface of the light guide is positioned (i) on the side of the second focal point, which side is closer to the first focal point and (ii) on the side of the intersecting point of the minor axis of the elliptic reflector and the curved surface of the elliptic reflector, which side is closer to the second focal point. This makes it possible to improve emission efficiency without largely deteriorating emission directivity.

According to the configuration, the round reflector is provided. If the elliptic reflector located on a side of the light source is extended to a lower side of the light source (i.e., a side of the light source which side does not face the light guide), the curved surface interferes with the light source, and accordingly light cannot be converged onto an intended location (i.e., the second focal point) because a focal location is deviated due to the curved surface having different curvatures. On the other hand, in a case where the round reflector, which is concentric with the light source, is provided on the side of the light source which side does not face the light guide, light emitted by the light source (i) is reflected in the opposite direction and (ii) is reflected by the elliptic reflector located on the side opposite to the light guide. This makes it possible to converge light onto the vicinity of the second focal point.

According to the configuration, in a case where the tubular light source is provided, the side reflector is provided which has a reflector surface lying perpendicular to the longitudinal axis of the tubular light source. The side reflector thus provided controls, together with the elliptic reflector, directivity of light, which is radially emitted by the tubular light source, so as to guide the light toward the opening of the front reflector.

As is clear from above, according to the present invention configured like above, it is possible to provide a light source apparatus that can be reduced in size, which light source apparatus is capable of controlling radiation angle and achieves high light converging efficiency.

Furthermore, each of the first and second light source apparatuses in accordance with the present invention is preferably configured such that, in addition to the above configuration, diameter of the opening of the front reflector is equal to a distance between line segments, one of which connects (i) the intersecting point of the minor axis of the elliptic reflector and the curved surface of the elliptic reflector and (ii) the second focal point of the elliptic reflector, and the other of which connects (a) another intersecting point of the minor axis of the elliptic reflector and another curved surface of the elliptic reflector and (b) the second focal point of the elliptic reflector.

The above configuration makes it possible to improve emission efficiency without largely deteriorating emission directivity.

Furthermore, each of the first and second light source apparatuses in accordance with the present invention is preferably configured such that, in addition to the above configuration, the light guide is tapered such that width of the light guide increases gradually from the light entrance surface to the light exit surface.

With the light guide which is tapered like above, it is possible to change random radiation directivity of light, which passes through inside the light guide (i.e., in the light guide area), into uniform radiation directivity.

As such, by providing such a light guide, it is possible to cause light that has predetermined directivity to go out through the light exit surface of the light guide, and possible to cause such light to enter the spectral modulation member.

Furthermore, each of the first and second light source apparatuses in accordance with the present invention is preferably configured such that, in addition to the above configuration, a spectral modulation member, which is configured to output received light after attenuating a spectrum in a particular wavelength band of the received light, is provided on the light exit surface side of the light guide.

According to the configuration, light from the light exit surface of the light guide, which light has predetermined directivity, enters the spectral modulation member. This makes it possible to sufficiently utilize the foregoing characteristics of the spectral modulation member.

Note here that the spectral modulation member is a so-called optical filter. As described earlier, the spectral modulation member has incidence angle dependency. As described earlier, according to a conventional configuration, there have been various problems caused because light having predetermined directivity does not enter the optical filter. On the other hand, according to the configuration of this aspect of the present invention, it is possible to obtain incident light which conforms to the incidence angle dependency of the spectral modulation member. This makes it possible to significantly suppress a loss of light.

According to the configuration of this aspect of the present invention, it is possible to cause light, which has predetermined directivity, to enter the spectral modulation member with high efficiently. It is therefore possible to reduce the size of an apparatus, as compared with conventional configurations.

Since the light source apparatus in accordance with the present invention has been reduced in size and has achieved high light converging efficiency, by providing the light source apparatus as a light source apparatus of a pseudo-sunlight irradiation apparatus, it is possible to reduce the size of the pseudo-sunlight irradiation apparatus.

The present invention also encompasses a pseudo-sunlight irradiation apparatus including a light source apparatus configured like above.

Furthermore, the pseudo-sunlight irradiation apparatus in accordance with the present invention can be configured such that, in addition to the above configuration, a spectral modulation member, which is configured to output received light after attenuating a spectrum in a particular wavelength band of the received light, is provided on the light exit surface side of the light guide of the light source apparatus, and can further include a light guide plate which receives the light from the spectral modulation member.

### (Supplemental Remarks)

The present invention can also be described as having the following features. Specifically, a light source apparatus in accordance with the present invention can also be described as including: a tubular light source; an elliptic reflector (i) which converges light from the tubular light and (ii) whose reflecting surface has a curve-shaped cross section; a front reflector which (i) is provided so as to face the elliptic reflector, (ii) has an arc-shaped cross section substantially centered on a location of the tubular light source and (iii) has an opening through which the light goes out; a round reflector which (i) is provided so as to face the front reflector and (ii) reflects light that travels in a direction opposite to a direction in which the light goes out; and a side reflector which is perpendicular to a longitudinal axis of the tubular light source, wherein (i) the light source is provided in the first focal point of the elliptic reflector and (ii) the opening through which the light goes out is positioned on a side of the second focal point of the elliptic reflector, which side is closer to the first focal point of the elliptic reflector. Another light source apparatus in accordance with the present invention includes: a bulb light source; an elliptic reflector (i) which converges light from the bulb light source and (ii) whose reflecting surface has a curve-shaped cross section; a front reflector which (i) is provided so as to face the elliptic reflector, (ii) has an arc-shaped cross section substantially centered on a location of the bulb light source and (iii) has an opening through which the light goes out; and a round reflector which (i) is provided so as to face the front reflector and (ii) reflects light that travels in a direction opposite to a direction in which the light goes out, wherein (i) the light source of the light source section is provided in the first focal point of the elliptic reflector and (ii) the opening through which the light goes out is positioned on a side of the second focal point of the elliptic reflector, which side is closer to the first focal point of the elliptic reflector. In the above configuration, the light source section is preferably configured such that, in a position through which light enters the light guide, the diameter of the opening of the light source section is substantially equal to a distance between line segments, one of which connects (i) an intersecting point of a minor axis of the elliptic reflector and a curved surface of the elliptic reflector and (ii) the second focal point of the elliptic reflector, and the other of which connects (a) another intersecting point of the minor axis of the elliptic reflector and another curved surface of the elliptic reflector and (b) the second focal point of the elliptic reflector. Furthermore, a pseudo-sunlight irradiation apparatus in accordance with the present invention includes the above light source apparatus.

### Industrial Applicability

A light source apparatus in accordance with the present invention is usable for tests, measurements and experiments of solar cells. Furthermore, the light source apparatus is usable for color fading and light stability tests of cosmetics, paints, adhesives and various materials. Moreover, the light source apparatus is usable for tests and experiments of photocatalysts and for other various experiments which require natural light.

Reference Signs List

| | |
|---|---|
| 1: | Light source apparatus |
| 2: | Reflecting body |
| 3: | Housing |
| 3a: | Cooling device |
| 4: | Light guide plate |
| 4a: | Scattering groove |
| 10: | Light source apparatus |
| 11: | (Tubular) light source |
| 12: | Reflecting member |
| 13: | Round reflector |
| 14: | Elliptic reflector |
| 15: | Side reflector |
| 16: | Front reflector |
| 18: | Minor axis of an ellipse |
| 19: | First focal point |
| 20: | Second focal point |
| 21: | Opening |
| 23: | Bulb light source |
| 30: | Light guide |
| 32: | Light path |
| 40: | Optical filter |
| 50: | Area |
| 60: | Surface area |
| 70: | Pseudo-sunlight irradiation apparatus |
| 80: | Irradiation surface |

## Claims

1. A light source apparatus, comprising:
a tubular light source which emits light;
an elliptic reflector (i) in which the tubular light source is provided in a first focal point of the elliptic reflector and (ii) which converges the light emitted from the tubular light source to a second focal point of the elliptic reflector;
a front reflector which (i) is provided so as to face the elliptic reflector, (ii) has an arc-shaped cross section substantially centered on a location of the tubular light source and (iii) has an opening through which the light goes out;
a round reflector which (i) is provided so as to face the front reflector and (ii) reflects light that travels in a direction opposite to a direction in which the light goes out;
a side reflector which has a reflector surface perpendicular to a longitudinal axis of the tubular light source; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

2. A light source apparatus, comprising:
a bulb light source which emits light;
an elliptic reflector (i) in which the bulb light source is provided in a first focal point of the elliptic reflector and (ii) which converges the light emitted from the bulb light source to a second focal point of the elliptic reflector;
a front reflector which (i) is provided so as to face the elliptic reflector, (ii) has an arc-shaped cross section centered on a location of the bulb light source and (iii) has an opening through which the light goes out;
a round reflector which (i) is provided so as to face the front reflector and (ii) reflects light that travels in a direction opposite to a direction in which the light goes out; and
a light guide which has (i) a light entrance surface of the same size as the opening of the front reflector, the light entrance surface being located at the opening, (ii) a light exit surface and (iii) a light guide area between the light entrance surface and the light exit surface, the light guide controlling directivity of light in the light guide area,
the light entrance surface of the light guide being positioned (i) on a side of the second focal point, which side is closer to the first focal point and (ii) on a side of an intersecting point of a minor axis of the elliptic reflector and a curved surface of the elliptic reflector, which side is closer to the second focal point.

3. The light source apparatus according to claim 1 or 2, wherein diameter of the opening of the front reflector is equal to a distance between line segments, one of which connects (i) the intersecting point of the minor axis of the elliptic reflector and the curved surface of the elliptic reflector and (ii) the second focal point of the elliptic reflector, and the other of which connects (a) another intersecting point of the minor axis of the elliptic reflector and another curved surface of the elliptic reflector and (b) the second focal point of the elliptic reflector.

4. The light source apparatus according to any one of claims 1 through 3, wherein the light guide is tapered such that width of the light guide increases gradually from the light entrance surface to the light exit surface.

5. The light source apparatus according to any one of claims 1 through 4, wherein a spectral modulation member, which is configured to output received light after attenuating a spectrum in a particular wavelength band of the received light, is provided on the light exit surface side of the light guide.

6. A pseudo-sunlight irradiation apparatus, comprising a light source apparatus recited in any of claims 1 through 5.

7. The pseudo-sunlight irradiation apparatus according to claim 6, wherein a spectral modulation member, which is configured to output received light after attenuating a spectrum in a particular wavelength band of the received light, is provided on the light exit surface side of the light guide of the light source apparatus,
said pseudo-sunlight irradiation apparatus further comprising a light guide plate which receives the light from the spectral modulation member.
